# EUROPEAN PATENT SPECIFICATION

(11) **EP 2 954 606 B1**
(45) Date of publication and mention of the grant of the patent: **29.04.2020**
(21) Application number: 14707219.3
(22) Date of filing: 22.01.2014
(51) Int. Cl.: H02J 3/32, H02J 3/38, H02J 7/34, H02J 7/35, H02J 9/06

(54) **SYSTEM FOR DISTRIBUTING AND STORING ELECTRIC ENERGY**
SYSTEM ZUM VERTEILEN UND SPEICHERN ELEKTRISCHER ENERGIE
SYSTÈME POUR DISTRIBUER ET STOCKER UNE ÉNERGIE ÉLECTRIQUE

(30) Priority: 08.02.2013 IT MI20130182
(43) Date of publication of application: 16.12.2015
(73) Proprietor: Sala, Giovanni, 20871 Vimercate (MB) (IT); Rossato, Gabriele, 36078 Valdagno (VI) (IT); Gargiuolo, Francesco, 20871 Vimercate (MB) (IT); Sala, Davide, 20862 Arcore (MB) (IT); Limonta, Alberto, 20871 Vimercate (MB) (IT); Brioschi, Maurizio Egidio, 20871 Vimercate (MB) (IT); Rossato, Michele, 36070 Brogliano (VI) (IT); Peretto, Giuseppe Carmine, 36078 Valdagno (VI) (IT)
(72) Inventor: Sala, Giovanni, 20871 Vimercate (MB) (IT); Rossato, Gabriele, 36078 Valdagno (VI) (IT); Gargiuolo, Francesco, 20871 Vimercate (MB) (IT); Sala, Davide, 20862 Arcore (MB) (IT); Limonta, Alberto, 20871 Vimercate (MB) (IT); Brioschi, Maurizio Egidio, 20871 Vimercate (MB) (IT); Rossato, Michele, 36070 Brogliano (VI) (IT); Peretto, Giuseppe Carmine, 36078 Valdagno (VI) (IT)
(74) Representative: Cammareri, Emanuele
(86) International application number: PCT/IB2014/058457
(87) International publication number: WO 2014/122545

(56) References cited:
- WO-A1-2011/039608
- WO-A1-2011/162722
- US-A1- 2012 032 507
- NOMOTO S ET AL: "Advanced capacitors and their application", JOURNAL OF POWER SOURCES, ELSEVIER SA, CH, vol. 97-98, 1 July 2001 (2001-07-01), pages 807-811, XP004254634, ISSN: 0378-7753, DOI: 10.1016/S0378-7753(01)00612-7
- KONDOH J ET AL: "Electrical energy storage systems for energy networks", ENERGY CONVERSION AND MANAGEMENT, ELSEVIER SCIENCE PUBLISHERS, OXFORD, GB, vol. 41, no. 17, 1 November 2000 (2000-11-01), pages 1863-1874, XP004205720, ISSN: 0196-8904, DOI: 10.1016/S0196-8904(00)00028-5

## Description

### Field of the invention

The present invention refers to a system for distributing and storing electric energy and finds an application for example in residential or industrial structures, generally connected to a fixed electric network and provided with alternative energy sources, specifically renewable energy sources such as photovoltaic panels, wind systems, photovoltaic or geothermal fields.

### Prior art

It is known that residential or industrial structures can be supplied by electric energy delivered from renewable sources, parallely to the fixed network. The renewable sources, by their nature, are capable of supplying energy only in particularly circumstances. For example, the photovoltaic panels are capable of supplying electric energy only in the daytime, while wind systems only in the presence of wind. When the electric energy supplied by the renewable sources is not sufficient, the electric current is withdrawn from the fixed electric network.

The known systems have been devised for putting the alternative sources before the fixed network, in other words to supply electric energy to the users by withdrawing it from an alternative source, if it is possible.

Often, however, the output peaks of an alternative source are not the same as the peaks required by the users, so that, if the energy produced by an alternative source is low in comparison with the one required by the users, the energy must be withdrawn from the fixed network, while in the presence of a high energy output with respect to the necessity of the users, the surplus of energy is released to the network, without storing it.

For example, International Application WO 2011/162722 discloses an energy storage system comprising: a plurality of storage mediums having substantially different energy and power density each connected to a DC bus via a respective bidirectional isolated DC-DC converter; and a controller configured to independently determine a current demand for each storage medium based on a control mode.

WO 2011/039608 discloses an electric power distribution system equipped with: a plurality of output converters which are separately provided corresponding to a plurality of electric power sources, and which output DC power at a predetermined voltage level using the electric power supplied by the electric power source to which each converter is connected. A system control unit which commands the output voltage control operations of the plurality of output converters. The system control unit sets a single output voltage command value and changes the output voltage of the plurality of output converters in conjunction with one another.

Therefore, the known systems are generally not capable of storing the energy produced by the alternative sources when it is low the demand from the users and to give it back when necessary. Therefore, the dependence on the fixed network is still substantial.

Even though it has been tried the use of batteries for storing energy, their use is still substantially troublesome. In fact, the known batteries, besides generally having short cycle lives, require a complex maintenance and therefore entail high costs, which cancels the economical advantages typical of the use of energy sources alternative to the fixed network.

### Summary of the invention

Therefore, an object of the present invention consists of making available a system for distributing and storing electric energy, which exploits energy sources alternative to the fixed network, and which enables to efficiently exploit the latter, in other words capable of maximizing the quantity of energy produced by the alternative sources which is really used by the users connected to the system.

A further object of the present invention consists of making available a system for distributing and storing electric energy which shows a sufficiently long duration.

This and other objects are met by a system for distributing and storing electric energy according to claim 1.

### Brief description of the drawings

To better understand the invention and appreciate its advantages, in the following some exemplifying non-limiting embodiments thereof will be described with reference to the attached drawings, wherein:

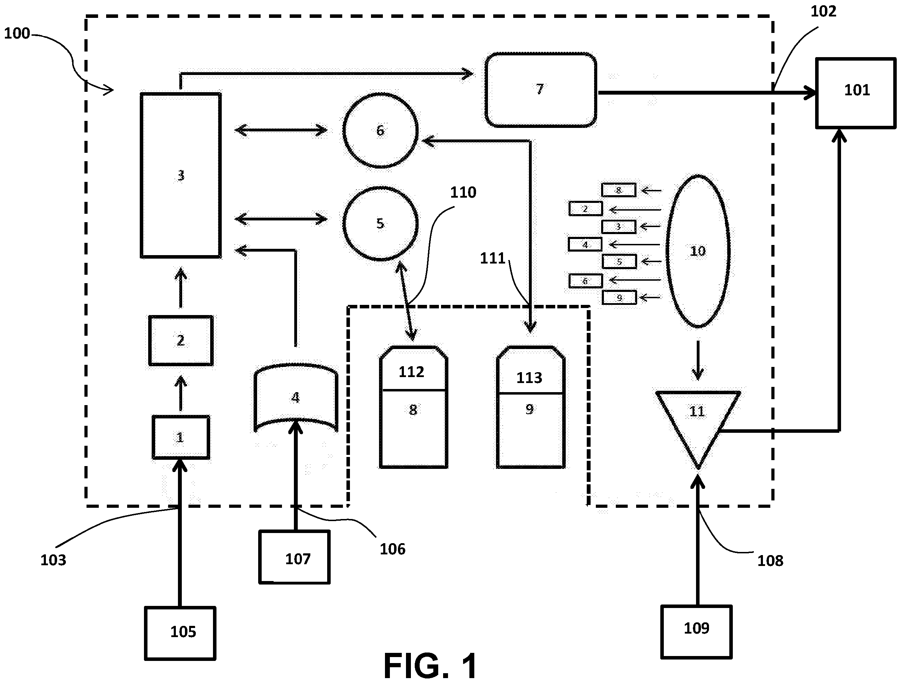

Figure 1 is a schematic view of a system for distributing and storing electric energy according to a possible embodiment of the invention.

### Detailed description of the invention

With reference to Figure 1, a system for distributing and storing electric energy has been generally shown by 100. System 100 is suitable for being installed in residential structures, such as condominiums or private houses, or in industrial structures, such as manufacturing plants or photovoltaic fields.

System 100 is suitable for supplying electric energy to one or more users 101, for example houses in a residential structure, or departments of an industrial structure, or for reselling it to the network of a public or private energy provider, by withdrawing it from different sources. To this end, system 100 comprises at least one output terminal 102 for supplying electric energy to users 101.

System 100 comprises at least one first input terminal 103 connectable to the fixed electric network for withdrawing electric energy from the latter. In Figure 1, the fixed electric network has been schematically shown by reference number 105. The current supplied by the fixed electric network 105 is usually of the alternate current type.

Moreover, system 100 comprises at least one second input terminal 106 which is connected or connectable to at least one electric energy source 107 alternative to the fixed network, for withdrawing electric energy from the latter. Specifically, the alternative energy source 107 can comprise renewable energy sources such as, for example, photovoltaic panels, wind turbines, or geothermal sources, etcetera.

According to a possible embodiment, system 100 comprises at least one third input terminal 108 connected or connectable to an auxiliary generation system 109, for withdrawing energy from the latter for example in case of fails, emergency, maintenance, or in case of an insufficient energy output from other sources. For example, the auxiliary generation system 109 can comprise power and cogeneration units, for example supplied by fossil fuels or liquefied petroleum gas. The activation of the auxiliary generation system 109 can be for example managed by an auxiliary control module 11.

System 100 comprises a first input/output terminal 110 connected or connectable to a first storage system 8 for storing electric energy in the latter and for withdrawing the stored electric energy from the same. Further, system 100 comprises a second input/output terminal 111 connected or connectable to a second storage system 9 for storing electric energy in the latter or withdrawing the stored electric energy from the same. First and second storage systems 8, 9 are different from each other. Preferably, first storage system 8 is characterized by charge and discharge rates greater than the second storage system, but it stores smaller quantities of energy.

Particularly, first storage system 8 preferably comprises one or more supercapacitors, serially and/or parallelly connected to each other. The term "supercapacitor" means a type of accumulator which is known per se, which exploits the capability of the capacitors to store electrical charge. The supercapacitors, in comparison with chemical type batteries, show shorter charge and discharge times; however, they are capable of storing a quantity of energy lower than the one of the chemical accumulators.

Preferably, second storage system 9 comprises one or more chemical-type batteries, which are also serially and/or parallelly connected to each other, still more preferably one or more lithium batteries, for example LiFePO4-type batteries.

Advantageously, a first and second balancing systems 112, 113 are associated to the first and second storage systems 8, 9, respectively. Such balancing systems 112, 113 preferably comprise one or more electronic devices associated to each element of the storage systems 8, 9 (for example associated to each supercapacitor and to each lithium battery) and have the function of maintaining, during the recharging step, the recharging voltage comprised between predetermined values, specifically of supplying the storage systems with voltage values substantially equal to the rated voltage. In this way, overvoltages are avoided which could damage the elements of a storage sysem, and reduce their lifetime and operability. Advantageously, the balancing systems 112, 113 are of the active-type, in other words they can be activated in a controlled way by switching their inside electronic components (particularly MOSFET transistors and microprocessors). Further characteristics and functions of a balancing system will be described in the following.

Advantageously, system 1 comprises a module 1 for filtering the electric signal from the fixed network 104. According to a possible embodiment, filtering module 1 comprises one or more passive filters suitable for reducing possible peaks or noises (for example RFI or EMI noises).

More advantageously, system 100 comprises a transforming module 2 for modifying the voltage output by filtering module 1, into a different voltage, suitable to be managed by the system 100. Transforming module 2 can comprise transformers of different types, for example electromechanical-type transformers or electronic-type transformers, known per se, preferably a pull-up transformer. According to a possible embodiment, the transforming module 2 comprises an insulating transformer, for example a toroidal electromechanical transformer, having an electric insulation between the windings such to electrically insulate the electric network 105 from users 101. Alternatively, transforming module 2 can comprise a "switching" electronic-type transformer. The voltage output from transforming module 2 is preferably comprised between 24 VAC - 1000 VAC.

System 100 comprises a control module 3 configured to supply electric energy to users 101 by alternatively withdrawing it from the alternative electric energy source 107, from the first storage system 8, from the second storage system 9, from the fixed electric network 105, or possibly from the auxiliary generation system 109, in a way that will be described in the following. Moreover, control module 3 manages the recharge of the first and second storage systems 8, 9, in ways that will be described in the following, by withdrawing the necessary energy from the alternative electric energy source 107, fixed electric network 105, or possibly from the auxiliary generation system 109.

According to a possible embodiment, control module 3 comprises an electronic board provided with a microprocessor.

Preferably, system 100 comprises a module 4 for pre-processing the currents from the alternative energy source 107. It has the function of equally dividing the voltages of the currents from such source 107, and particularly of avoiding overloads or energy losses caused by voltage differences. For example, with reference to the modules of photovoltaic panels, each of them could supply current at different voltage. The pre-processing module 4 parallelly connects such modules, in order to smooth the voltages. The pre-processing module 4 comprises for example power diodes and smoothing capacitors. The voltage of the current from the pre-processing module 4 is preferably comprised between 80 VDC and 1000 VDC.

Preferably, between the control module 3 and users 101, system 100 comprises a module 7 for processing the output current. Such module 7 has the function of taking the current from control module 3 to voltage and intensity values suitable for the users. Moreover, module 7 is capable of converting the continuous current into alternate current in case the users 101 use continuous current. According to a possible embodiment, the output current processing module 7 comprises an inverter system. Preferably, currents from processing module 7 have a voltage comprised between 12 VAC and 560 VAC. Alternatively, they can have a voltage comprised between 5 VDC and 2000 VDC.

Advantageously, system 100 comprises a first and second recharge modules 5, 6 which are associated to the first and second storage modules 8, 9, respectively. First and second recharge modules 5, 6 are commanded by the control module 3 and have the function of managing the recharge of first and second storage modules 8, 9. Specifically, they acts on the charge currents as they are supplied by the control module 3 and make them suitable for the storage systems 8, 9. Preferably, the voltages of the currents from control module 3 to the recharge modules 5, 6 are comprised between 80 VDC and 1000 VDC. According to a possible embodiment, recharge modules 5, 6 comprise respective electronic boards provided with a microprocessor. Advantageously, recharge modules 5, 6 adjust the charging currents of the storage systems according to the pulse width modulation (PWM), with a frequency preferably comprised between 10 HZ and 25 KHz. More advantageously, recharge modules 5, 6 are configured to activate the first and second balancing systems 112, 113, respectively associated to the first and second storage systems 8, 9 only when the latter are recharged. The use of active-type balancing systems which are activated only if need be, enables to limit the energy losses which would exist for example if passive-type balancing systems are used. In fact, the latter, of the resistive type, are always active and therefore they continuously dissipate energy. This case does not occur when the active balancing systems dissipate energy just when they are activated by the recharge modules. Still more advantageously, recharge module 5, 6 are configured to deactivate the balancing systems 112, 113 when the corresponding storage systems 8, 9 are completely charged or have reached a predetermined charge level.

Further advantageously, recharge modules 5, 6 monitor the maximum temperatures and currents in the first and second storage systems 8, 9, in order to prevent them to damage the systems.

According to a possible embodiment, system 100 comprises an user interface module 10 for enabling an user to manage the system 100 and displaying its operative parameters. The user interface module 10 can for example comprise a PLC or a microprocessor, and a display system, for example a screen. The user interface module 10 communicates with at least some of the sysem modules or devices. Particularly, it preferably communicates with the transforming module 2, control module 3, pre-processing module 4, first recharge module 5, second recharge module 6, first storage system 8, and second storage system 9. The data transmission among the above mentioned modules and user interface module 10 can be performed by a wired system or wirelessly.

According to a possible embodiment, it is possible to provide proportional switches between the control module 3 and, respectively, the transforming module 2 and/or first recharge module 5 and/or second recharge module 6.

In the following, the modes for managing the energy flows from the control module 3, particularly the modes for selecting the energy source for supplying the electric current requested by the users 101, and the modes for recharging the first and second storage systems 8, 9 will be described.

Control module 3, given a certain instantaneous quantity of energy requested by the user, withdraws such energy from one source at a time according to a predefined sequence. Particularly, control module 3 is configured to supply 3 electric energy to the user 101 by withdrawing it until it is reached an instantaneous required quantity with the following sequence:
1) from the alternative electric energy source 107;
2) from the first storage 8;
3) from the second storage system 9;
4) from the fixed electric network 105.

Therefore, firstly, the electric energy for users 101 is withdrawn from the alternative electric energy source 107. If the instantaneous energy quantity available from the alternative electric energy source 107 is not sufficient to meet the need of users, it is withdrawn energy not only from the alternative electric energy source 107, but also from the first storage system 8. If the available overall instantaneous energy quantity from the alternative electric energy source 107 and first storage system 8 is not enough to meet the need of the users, it is withdrawn energy, not only from the alternative electric energy source 107 and first storage system 8, but also from the second storage system 9. If the available overall instantaneous energy quantity from the alternative electric energy source 107, first storage system 8 and second storage system 9 is not enough to meet the need of the users, it is withdrawn energy, not only from the alternative electric energy source 107, first storage system 8 and second storage system 9, but also from the fixed electric network 105.

In case no source is available among the above mentioned energy sources, or in case no source has met the maximum instant suppliable energy quantity, control module 5 can withdraw further energy from the auxiliary generation system 109.

As it will be better understood by a person skilled in the art, control module 3 acts in order to withdraw energy from the fixed electric network 105 and/of from the auxiliary generation system 109 only in case of necessity.

It is important to note that the first and second storage systems 8, 9 are used one after the other, in other words it is required energy to the second storage system 9 only when the first storage system 8 is no more capable of supplying energy. This mode for withdrawing energy causes the first storage system 8 to be used more than the second one 9, and therefore it will have a long lifetime and it will need a limited maintenance. The use of supercapacitors in the first storage system 8 and of chemical batteries, particularly lithium batteries, in the second storage system 9 is particularly advantageous with reference to this principle of exploiting the storage systems. In fact, lithium batteries, which are more affected by repeated charge cycles than the supercapacitors, are used less than the latter.

Therefore, when the instant energy required by the users 101 is greater than the instant energy available from the alternative energy source 107, it is successively used the charge of the first and second storage systems 8, 9.

Instead, in case the instant energy required by the users 101 is equal (except for the energy losses inside the system 100) to the instant energy supplied by the alternative energy source 107, all the energy is withdrawn from the latter.

In case the instant energy required by the uses 101, is less than the instant energy supplied by the alternative energy source 107, users 101 will receive all the requested energy from the alternative energy source 107, and the energy surplus is used for charging the storage systems 8, 9.

Advantageously, control module 3 is configured to recharge the storage systems 8, 9 according to a predetermined sequence. Particularly, it is performed a complete recharge, or to a predetermined charge level, before the first storage system 8. Only at the end of this operation, the second storage system 9 is completely recharged or to a predetermined maximum level.

Therefore, also during the recharging processes, second storage system 9 gives place to the first storage system 8. In fact, first storage system 8, as previously discussed, is more often subjected to a discharge and therefore is more frequently recharged. In this way, second storage system 9 is more preserved since it is recharged for a smaller number of times than the first storage system. Also the logic for recharging the storage systems is particularly advantageous when combined with the use of supercapacitors in the first storage system 8 and of chemical batteries, particularly lithium batteries, in the second storage system 9. In fact, the latter, more subjected to wear due to the repeated charge and discharge cycles, are recharged a smaller number of times than the supercapacitors, which instead are less subjected to wear caused by repeated cycles. Moreover, the recharging modes ensure therefore a long lifetime of the system 100.

It is observed that in the present description and in the attached claims, terms as "instant energy" or "quantity of instant energy" refer to magnitudes such as electric power or similar magnitudes.

Moreover, it is observed that in the present description and in the following claims, system 100 and the elements indicated by the term "module" can be implemented by hardware devices (control units, for example), by software or by a combination of hardware and software.

From the above description, the person skilled in the art could appreciate that the system, according to the invention, enables to store energy from sources alternative to the electric network, and therefore enables to substantially reduce the necessity of withdrawing current from the fixed electric network or from auxiliary generation systems.

The person skilled in art can also appreciate that the charge and recharge modes of the storage systems ensure a long lifetime thereof and therefore a long duration of the overall system.

Lastly, the person skilled in the art could appreciate that the system according to the invention enables to reduce the energy losses thanks to the presence of the active balancing systems which are activated only during the steps of recharging the storage systems.

## Claims

1. System (100) for distributing and storing electric energy, comprising:
- a first input terminal (103) connectable to a fixed electric network (105) for withdrawing electric energy from the latter;
- a second input terminal (106) connected or connectable to an electric energy source (107) alternative to the fixed electric network (105), particularly a renewable energy source, for withdrawing electric energy from the latter;
- an output terminal (102) for delivering electric energy to one or more users (101);
- a first input/output terminal (110) connected to a first storage system (8) for storing electric energy in the latter and for withdrawing stored electric energy from the same;
- a second input/output terminal (111) connected to a second storage system (9) for storing electric energy in the latter and withdrawing stored electric energy from the same, the second storage system (9) being of a type different from the first storage system (8), and
- a control module (3) configured in order to deliver electric energy to one or more users (101) by withdrawing it until an instantaneous required quantity is reached,
**characterized in that**
the control module (3) is configured for withdrawing said instantaneous required quantity of energy with the following sequence:
1) from the second input terminal (106) connected to the electric energy source (107) alternative to the fixed electric network (105);
2) from the first input/output terminal (110) connected to the first storage system (8);
3) from the second input/output terminal (111) connected to the second storage system (9);
4) from the first input terminal (103) connected to the fixed electric network (105).

2. System (100) according to claim 1, comprising a third input terminal (108) connected to an auxiliary generation system (109), wherein said control module (3) is configured so that, without available electric energy from the fixed electric network (105) or if the instantaneous quantity available from the same is exceeded, the electric energy to be delivered to the one or more users (101) is withdrawn subsequently:
5) from the third input terminal (108) connected to the auxiliary generation system (109).

3. System (100) according to claim 1 or 2, wherein said control module (3) is configured so that if the instantaneous energy quantity required from the one or more users (101) is less than or equal to the instantaneous energy quantity available from the alternative electric energy source (107), all the electric energy for the users (101) is withdrawn from the second input terminal (106) connected to the electric energy source (107) alternative to the fixed electric network (105), and the excess of the available electric energy is delivered with the following sequence, until it is reached a corresponding complete recharge or until it is reached a predetermined charge level:
1) to the first storage system (8);
2) to the second storage system (9).

4. System (100) according to anyone of the preceding claims, wherein said control module (3) is configured so that if the instantaneous energy quantity required by the users (101) is greater than the instantaneous energy quantity available from the alternative electric energy (107), the electric energy for the users (101) is withdrawn with the following sequence, until it is reached the corresponding complete charge or until it is reached a predetermined minimum charge level:
1) from the first input/output terminal (110) connected to the first storage system (8);
2) from the second input/output terminal (111) connected to the second storage system (9).

5. System (100) according to anyone of the preceding claims, wherein said control module (3) is configured so that if the instantaneous energy quantity required by the users (101) is greater than the instantaneous energy quantity available from the alternative electric energy source (107), and both the first (8) and second storage systems (9) are completely discharged, or have a remaining charge less than or equal to a predetermined minimum charge level, the electric energy for the users (101) is withdrawn from the first input terminal (103) connected to the fixed electric network (105) and/or from the third input terminal (108) connected to the auxiliary generation system (109).

6. System (100) according to anyone of the preceding claims, wherein the first input/output terminal (110) is connected to said first storage system (8) which has charge and discharge rates greater than the ones of the second storage system (9), to which the second input/output terminal (111) is connected, and by storable energy quantities less than the ones of the second storage system (9).

7. System (100) according to anyone of the preceding claims, wherein the first input/output terminal (110) is connected to said first storage system (8) comprising one or more supercapacitors, and the second input/output terminal (111) is connected to said second storage system (9) comprising one or more chemical batteries, particularly lithium batteries.

8. System (100) according to anyone of the preceding claims, comprising a first balancing system (112) associated to the first storage system (8), and a second balancing system (113) associated to the second storage system (9), arranged so that the supply voltages of the first (8) and second storage systems (8) are kept inside predetermined values during the recharge.

9. System (100) according to the preceding claim, comprising a first (5) and a second recharge modules (6) associated to the first (8) and second storage systems (9) respectively, and connected to the control module (3), wherein said first (112) and second balancing systems (113) are of the active type, and said first (5) and second recharge modules (6) are configured to keep active the first (112) and the second balancing systems (113) only during the recharge respectively of the first (8) and the second storage systems (9).

10. System (100) according to anyone of the preceding claims, comprising a module (1) for filtering the electric signal from the fixed network (105), and a transformer module (2) for modifying the voltage output from the filtering module (1)

11. System (100) according to anyone of the preceding claims, comprising a user interface module (10) so that a user can manage the system (100), and for displaying its operative parameters.

12. System (100) according to anyone of the preceding claims, comprising an inverter module (7) for processing the current for the one or more users, or dedicated for selling it to an energy provider (101).

## Patentansprüche

1. System (100) zur Verteilung und Speicherung elektrischer Energie, das Folgendes umfasst:
- eine erste Einspeisungsanschlussstelle (103), die an ein festes Stromnetz (105) angeschlossen werden kann, um selbigem elektrische Energie zu entnehmen;
- eine zweite Einspeisungsanschlussstelle (106), die mit einer zum festen Stromnetz (105) alternativen elektrischen Energiequelle, insbesondere einer erneuerbaren Energiequelle, verbunden ist oder verbindbar ist, um der letztgenannten elektrische Energie zu entnehmen;
- eine Ausgabeanschlussstelle (102) zur Lieferung elektrischer Energie an einen oder mehrere Verbraucher (101);
- eine erste Einspeisungs-/Ausgabeanschlussstelle (110), die mit einem ersten Speichersystem (8) verbunden ist, um elektrische Energie in selbigem zu speichern und gespeicherte elektrische Energie aus ihm zu entnehmen;
- eine zweite Einspeisungs/Ausgabeanschlussstelle (111), die mit einem zweiten Speichersystem (9) verbunden ist, um elektrische Energie in letzterem zu speichern und gespeicherte elektrische Energie aus diesem zu entnehmen, wobei das zweite Speichersystem (9) von anderer Art als das erste Speichersystem (8) ist, und
- ein Steuermodul (3), das in einer Weise ausgelegt ist, dass es elektrische Energie an einen oder mehrere Verbraucher (101) liefert, indem es diese so lange entnimmt, bis eine momentan erforderliche Menge erreicht ist, **gekennzeichnet durch** den Umstand, dass das Steuermodul (3) für die nachgenannte Abfolge bei der Entnahme der besagten momentan erforderlichen Energiemenge ausgelegt ist:
1) von der zweiten Einspeisungsanschlussstelle (106), die an die zum festen Stromnetz (105) alternative elektrische Energiequelle (107) angeschlossen ist;
2) von der ersten Einspeisungs-/Ausgabeanschlussstelle (110), die an das erste Speichersystem (8) angeschlossen ist;
3) von der zweiten Einspeisungs-/Ausgabeanschlussstelle (111), die an das zweite Speichersystem (9) angeschlossen ist;
4) von der ersten Einspeisungsanschlussstelle (103), die an das feste Stromnetz (105) angeschlossen ist.

2. System (100) gemäß Anspruch 1, das eine dritte Einspeisungsanschlussstelle (108) umfasst, die mit einem Hilfsgeneratorsystem (109) verbunden ist, wobei das besagte Steuermodul (3) so ausgelegt ist, dass in Ermangelung verfügbarer elektrischer Energie aus dem festen Stromnetz (105) oder bei Überschreitung der momentan aus selbigem verfügbaren Menge die an den oder die Verbraucher (101) zu liefernde elektrische Energie anschließend entnommen wird
5) von der dritten Einspeisungsanschlussstelle (108), die an das Hilfsgeneratorsystem (109) angeschlossen ist.

3. System (100) gemäß Anspruch 1 oder 2, wobei das besagte Steuermodul (3) so ausgelegt ist, dass, wenn die von dem oder den Verbrauchern (101) benötigte momentane Energiemenge kleiner oder gleich der Energiemenge ist, die seitens der alternativen elektrischen Energiequelle (107) momentan zur Verfügung steht, die gesamte elektrische Energie für die Verbraucher (101) von der zweiten Einspeisungsanschlussstelle (106) entnommen wird, die an die zum festen Stromnetz (105) alternative elektrische Energiequelle (107) angeschlossen ist, und der Überschuss der verfügbaren elektrischen Energie gemäß der nachgenannten Abfolge geliefert wird, bis eine entsprechende vollständige Aufladung oder ein vorbestimmter Ladestand erreicht ist:
1) an das erste Speichersystem (8);
2) an das zweite Speichersystem (9).

4. System (100) gemäß einem beliebigen der vorgenannten Ansprüche, wobei das Steuermodul (3) so ausgelegt ist, dass, wenn die von den Verbrauchern benötigte momentane Energiemenge größer ist als die Energiemenge, die seitens der alternativen elektrischen Energie (107) momentan zur Verfügung steht, die elektrische Energie für die Verbraucher (101) in der nachgenannten Abfolge entnommen wird, bis die entsprechende vollständige Ladung oder ein vorbestimmter Mindestladestand erreicht ist:
1) von der ersten Einspeisungs/Ausgabeanschlussstelle (110), die an das erste Speichersystem (8) angeschlossen ist,
2) von der zweiten Einspeisungs-/Ausgabeanschlussstelle (111), die an das zweite Speichersystem (9) angeschlossen ist.

5. System (100) gemäß einem beliebigen der vorgenannten Ansprüche, wobei das besagte Steuermodul (3) so ausgelegt ist, dass, wenn die von den Verbrauchern (101) momentan benötigte Energiemenge größer ist als die Energiemenge, die seitens der alternativen elektrischen Energiequelle (107) momentan zur Verfügung steht, und sowohl das erste (8) als auch das zweite Speichersystem (9) vollständig entladen sind oder eine Restladung aufweisen, die kleiner oder gleich einem vorbestimmten Mindestladestand ist, wird die elektrische Energie für die Verbraucher (101) von der ersten Einspeisungsanschlussstelle (103) entnommen, die an das feste Stromnetz (105) angeschlossen ist, und/oder von der dritten Einspeisungsanschlussstelle (108), die an das Hilfsgeneratorsystem (109) angeschlossen ist.

6. System (100) gemäß einem beliebigen der vorgenannten Ansprüche, wobei die erste Einspeisungs-/Ausgabeanschlussstelle (110) mit dem besagten ersten Speichersystem (8) verbunden ist, welches größere Lade- und Entladeraten als das zweite Speichersystem (9) aufweist, an welches die zweite Einspeisungs-/Ausgabeanschlussstelle (111) angeschlossen ist, sowie durch speicherbare Energiemengen, die geringer als die des zweiten Speichersystems (9) sind.

7. System (100) gemäß einem beliebigen der vorgenannten Ansprüche, wobei die erste Einspeisungs-/Ausgabeanschlussstelle (110) mit dem besagten ersten Speichersystem (8) verbunden ist, das einen oder mehrere Superkondensatoren umfasst, und die zweite Einspeisungs-/Ausgabeanschlussstelle (111) mit dem besagten zweiten Speichersystem (9), das eine oder mehrere chemische Batterien, insbesondere Lithiumbatterien, umfasst.

8. System (100) gemäß einem beliebigen der vorgenannten Ansprüche, das ein erstes dem ersten Speichersystem (8) zugeordnetes Ausgleichssystem (112) sowie ein zweites, dem zweiten Speichersystem (9) zugeordnetes Ausgleichssystem (113) umfasst, die so gestaltet sind, dass die Versorgungsspannungen des ersten (8) und des zweiten Speichersystems (8) während des Wiederaufladens innerhalb vorbestimmter Werte bleiben.

9. System (100) gemäß dem vorgenannten Anspruch, das ein erstes (5) und ein zweites Wiederauflademodul (6) umfasst die dem ersten (8) beziehungsweise dem zweiten Speichersystem (9) zugeordnet und mit dem Steuermodul (3) verbunden sind, wobei das besagte erste (112) und das zweite Ausgleichssystem (113) vom aktiven Typ und das besagte erste (5) und das zweite Wiederauflademodul (6) so ausgelegt sind, dass sie das erste (112) und das zweite Ausgleichssystem (113) nur während des Wiederaufladens des ersten (8) beziehungsweise des zweiten Speichersystems (9) aktiv halten.

10. System (100) gemäß einem beliebigen der vorgenannten Ansprüche, das ein Modul (1) zum Filtern des elektrischen Signals aus dem festen Stromnetz (105) und ein Transformatormodul (2) zur Änderung der Ausgabespannung des Filtermoduls (1) umfasst.

11. System (100) gemäß einem beliebigen der vorgenannten Ansprüche, das ein Benutzerschnittstellenmodul (10) umfasst, damit ein Benutzer das System (100) verwalten kann und sich seine Betriebsparameter anzeigen lassen.

12. System (100) gemäß einem beliebigen der vorgenannten Ansprüche, das ein Wechselrichtermodul (7) umfasst, welches zur Verarbeitung des Stroms für den oder die Verbraucher oder zu seinem Verkauf an einen Energieversorger (101) dient.

## Revendications

1. Système (100) pour la distribution et stockage de l'énergie électrique, comprenant:
- un premier terminal input (103) connectable au réseau électrique fixe (105) pour prélever l'énergie électrique de ce dernier;
- un second terminal input (106) connecté ou connectable à une source de l'énergie électrique (107) alternative au réseau électrique fixe (105), en particulier à une source d'énergie renouvelable pour prélever l'énergie électrique de ce dernier;
- un output terminal (102) pour livraison de l'énergie électrique à un ou plusieurs consommateurs (101);
- un premier terminal input/output (110) connecté au premier appareil de stockage (8) pour l'emmagasinage de l'énergie électrique dans ce dernier et le prélèvement de ce même;
- un second terminal input/output (111) connecté à un second appareil de stockage pour emmagasiner l'énergie électrique dans ce dernier et prélever l'énergie emmagasinée de ce même, étant cet appareil (9) diffèrent du premier, et
- un module de contrôle configuré pour livrer l'énergie électrique à un ou plusieurs consommateurs (101) en la prélevant jusqu'à atteindre la quantité instantanée requise.
Le module est configure pour prélever la quantité instantanée requise surnommée en ce conséquence:
1) du second terminal input (106) connecté à la première source de l'énergie électrique (107) alternative au réseau électrique fixe (105)
2) du premier terminal input/output (110) connecté au premier appareil de stockage
3) du second terminal input/output (111) connecté au second appareil de stockage (9)
4) du premier terminal input (103) connecté au réseau électrique fixe (105).

2. Système (100) selon la définition 1, comprenant un troisième terminal input (108) connecté à un système de génération auxiliaire (109) dans lequelle le module de contrôle (3) est configuré ainsi que, sans énergie électrique disponible du réseau fixe (105) ou quand il y a un excès de l'énergie instantanée disponible, l'énergie électrique à livrer à un ou plusieurs consommateurs est prélevée ensuite: 5) du troisième terminal input (108) connecté au système de génération auxiliaire (109).

3. Le système (100) selon la définition 1 ou 2, où le module de contrôle (3) est configuré ainsi que la quantité de l'énergie instantanée requise d'un ou plusieurs consommateurs (101) est inférieure ou égale à la quantité instantanée de l'énergie disponible d'une source alternative de l'énergie électrique (107), toute l'énergie est prélevée du second terminal input (106) connecté à la source alternative au réseau fixe (105) et l'excès de l'énergie électrique disponible est livré selon la séquence suivante, jusqu'à ce que la recharge soit atteinte, ou jusqu'à atteindre le niveau de recharge prédéfini:
1) au premier appareil de stockage (8);
2) au second appareil de stockage (9).

4. Le système (100) selon l'une des définitions précédentes, où le module de contrôle (3) est configure ainsi que si la quantité instantanée de l'énergie requise par consommateurs (101) est supérieure de celle disponible de sources alternatives (107), l'énergie électrique pour les consommateurs est livrée selon la séquence suivante, jusqu'à atteindre la recharge complète ou jusqu'au atteindre le niveau de recharge prédéfini:
1) du premier terminal input/output (110) connecté au premier appareil de stockage,
2) du second terminal input/output (111) connecté au second appareil de stockage

5. Le système (100) selon l'une des définitions précédentes où le module de contrôle surnommé (3) est configuré ainsi que si la quantité de l'énergie électrique instantanée requise par consommateurs est supérieure de la quantité des sources alternatives disponible (107) et tous les deux, le premier et le second appareils de stockage, sont déchargés, ou si ils ont un niveau restant inférieur ou égal au minimum prédéfini de recharge, l'énergie électrique à livrer aux consommateurs (101) est livrée du premier terminal input connecté (103).

6. Le système (100) selon l'une des définitions précédentes, où le premier terminal input/output est connecté au surnommé premier appareil de stockage (8) qui ha une fréquence de charge et décharge supérieure aux celles du second appareil de stockage (9) auquel le second terminal input/output (111) est connecté et qui a la quantité de l'énergie stockable inférieure à celle du second appareil de stockage.

7. Le système (100) selon l'une des définitions précédentes ou le premier terminal input/output (110) est connecté au premier appareil de stockage (8) comprenant un ou plusieurs supercapaciteurs, et le second terminal input/output (111) est connecté au second appareil de stockage (9) comprenant une ou plusieurs batteries chimiques, en particulier batteries en lithium.

8. Le système (100) selon l'une des définitions précédentes, y compris un premier système d'équilibre (112) associé au premier appareil de stockage (8) et un second système d'équilibre (113) associé au second appareil de stockage (9), organisé ainsi que la tension d'alimentation du premier et second appareil soit tenue dans valeurs prédéterminées pendant la recharge.

9. Le système (100) selon la définition précédente, comprenant le premier (5) et le second module de recharge, associés au premier (8) et second (9) appareils de stockage respectivement, et connectés au module de contrôle (3) ou le premier (112) et le second système d'équilibre (113) seulement pendant le recharge respectivement du premier (8) et du second (9) appareil du stockage.

10. Le système, selon l'une des définitions précédentes, comprenant un module pour filtrer le signal électrique du réseau fixe (105) et un module transformateur pour modifier la tension de sortie du module de filtre.

11. Le système, selon l'une des définitions précédentes, comprenant un module d'interface d'utilisateur, afin qu'il puisse gérer le système (100) et pur afficher ses paramètres opératifs.

12. Le système (100) selon l'une des définitions précédentes, comprenant un module onduleur (7) pour le traitement du courent à un ou plusieurs consommateurs ou dédié à la vente au fournisseur d'énergie.
